# EUROPEAN PATENT SPECIFICATION

(11) **EP 3 900 874 B1**
(45) Date of publication and mention of the grant of the patent: **08.10.2025**
(21) Application number: 21163383.9
(22) Date of filing: 18.03.2021
(51) Int. Cl.: B25J 9/16

(54) **MACHINE TOOL WITH DOUBLE INLET AND DOUBLE OUTLET**
WERKZEUGMASCHINE MIT DOPPELTEM EINGANG UND AUSGANG
MACHINE-OUTIL A DOUBLE ENTREE ET SORTIE

(30) Priority: 30.03.2020 IT 202000006652
(43) Date of publication of application: 27.10.2021
(60) Divisional application: 22181443.7
(73) Proprietor: SCM Group S.p.A., 47921 Rimini (RN) (IT)
(72) Inventor: NERI, Alessandro, 47921 Rimini (IT); ROSSI, Simone, 47921 Rimini (IT)
(74) Representative: Tiburzi, Andrea

(56) References cited:
- EP-A1- 3 428 749
- DE-A1- 102008 050 967
- US-A1- 2010 092 273

## Description

The present invention relates to a machine tool with double inlet and double outlet.

More specifically, the invention relates to a machine tool equipped with a first station for the entry and the exit of the pieces, and a second station for the entry and the exit of the pieces, separated from each other by an operating station, where the machining of the pieces takes place.

US 2010/092273 A1 discloses a machine tool for machining workpieces, comprising:
- an operating unit provided with operating means for executing at least one operation on a workpiece;
- a first inlet and outlet zone for allowing the inlet of at least one workpiece to be machined into said operating unit and the outlet of at least one machined workpiece from said operating unit, said first inlet and outlet zone being available, in use, to a human operator;
- a second inlet and outlet zone for allowing the inlet of at least one workpiece to be machined into said operating unit and the outlet of at least one machined workpiece from said operating unit;
- a robot or a manipulator arranged at said second inlet and
   outlet zone and adapted to load at least one workpiece in said second inlet and outlet zone and to unload at least one workpiece from said second inlet and outlet zone;

In the following, the description will be directed to a machine tool equipped with operating means for drilling vertically arranged panels, but it is clear that these operating means can be of different kinds, namely, suitable for the execution of different processes, as well as the pieces to be machined can have whatever shape and orientation.

The purpose of the present invention is to provide a machine tool for the processing of various types of pieces, which allows the simultaneous intervention on it by a human operator and a robot, or manipulator, for the execution of the operations of loading and unloading of the pieces.

Another object of the invention is to provide a machine tool for machining pieces, which has a high productivity and reduced downtimes.

A further object of the present invention is to provide a machine tool for machining pieces, which is configured in such a way as to ease the operations of loading the pieces to be machined and unloading the machined pieces.

It is therefore specific object of the present invention a machine tool for machining workpieces, comprising: an operating unit provided with operating means for executing at least one operation on a workpiece; a first inlet and outlet zone for allowing the inlet of at least one workpiece to be machined into said operating unit and the outlet of at least one machined workpiece from said operating unit, said first inlet and outlet zone being available, in use, to a human operator; a second inlet and outlet zone for allowing the inlet of at least one workpiece to be machined into said operating unit and the outlet of at least one machined workpiece from said operating unit; first movement means for transporting at least one workpiece from said first inlet and outlet zone to said operating unit and vice versa, and from said operating unit to said second inlet and outlet zone and vice versa; first reference means for attributing at least one spatial reference to at least one workpiece entering said operating unit from said first inlet and outlet zone; second reference means for attributing at least one spatial reference to at least one workpiece entering said operating unit from said second inlet and outlet zone; and a robot or a manipulator arranged at said second inlet and outlet zone and adapted to load at least one workpiece in said second inlet and outlet zone and to unload at least one workpiece from said second inlet and outlet zone; wherein said second inlet and outlet zone is arranged in opposite position to said first inlet and outlet zone so that the operating unit is arranged between said first inlet and outlet zone and second inlet and outlet zone so that the area of action of said robot or manipulator does not interfere with the area of action of said human operator.

Preferably according to the invention, said first reference means comprise at least a first abutment element which is movable between an inactive position, wherein said first abutment element does not interfere, in use, with at least one workpiece to be transported from said first inlet and outlet zone to said operating unit, and an operating position, wherein said first abutment element interferes, in use, with at least one workpiece to be transported from said first inlet and outlet zone to said operating unit.

Preferably according to the invention, said second reference means comprise at least a second abutment element which is movable between an inactive position, wherein said at least a second abutment element does not interfere, in use, with at least one workpiece to be transported from said second inlet and outlet zone to said operating unit, and an operating position, wherein said at least a second abutment element interferes, in use, with at least one workpiece to be transported from said second inlet and outlet zone to said operating unit.

Conveniently according to the invention, said first movement means may be configured to transport at least one workpiece arranged in substantially vertical or oblique position.

Advantageously according to the invention, said first movement means may comprise grippers adapted to grip at least one workpiece and movable from said first inlet and outlet zone to said operating unit and vice versa, and from said operating unit to said second inlet and outlet zone and vice versa.

Preferably according to the invention, said machine comprises: a third zone adjacent to said second inlet and outlet zone on the opposite side with respect to said operating unit, so that said second inlet and outlet zone is arranged between said third zone and said operating unit; and second movement means for transporting at least one workpiece from said third zone to said second inlet and outlet zone and from said second inlet and outlet zone to said third zone.

Preferably according to the invention, said machine comprises: a fourth zone adjacent to said third zone on the opposite side with respect to said second inlet and outlet zone, so that said third zone is arranged between said second inlet and outlet zone and said fourth zone; and third movement means or transporting at least one workpiece from said third zone to said fourth zone and vice versa.

Further according to the invention, said third movement means may be configured to transport at least one workpiece arranged in substantially vertical or oblique position.

Advantageously according to the invention, said robot or manipulator may be configured to load at least one workpiece in said third zone and to unload at least one workpiece from said third zone.

Further according to the invention, said robot or manipulator may be configured to load at least one workpiece in said fourth zone and to unload at least one workpiece from said fourth zone.

Conveniently according to the invention, said machine may comprise a control unit operatively connected to said operating unit, said first movement means, said first reference means, said second movement means, said second reference means and to said robot or manipulator to coordinate the operation of said operating unit, said first movement means, said first reference means, said second movement means, said second reference means and said robot or manipulator.

A method for using a machine tool for machining workpieces is also disclosed but not claimed, comprising: an operating unit provided with operating means for executing at least one operation on a workpiece; a second inlet and outlet zone for allowing the inlet of at least one workpiece to be machined into said operating unit and the outlet of at least one machined workpiece from said operating unit; a third zone arranged adjacent to said second inlet and outlet zone on the opposite side with respect to said operating unit second movement means for transporting at least one workpiece from said third zone to said second inlet and outlet zone and from said second inlet and outlet zone to said third zone; a fourth zone adjacent to said third inlet and outlet zone on the opposite side with respect to said second inlet and outlet zone, so that said second inlet and outlet zone is arranged between said third zone and said second inlet and outlet zone; third movement means for transporting at least one workpiece from said third zone to said fourth zone and vice versa; a robot or manipulator configured to load at least one workpiece in said third zone and/or in said fourth zone and to unload at least one workpiece from said third zone and/or from said fourth zone; wherein said method comprises, in sequence, the steps of: processing a first workpiece by means of said operating unit and simultaneously bringing a second workpiece in the vicinity of said third zone by means of said robot or manipulator; transporting said first workpiece from said operating unit to said fourth zone; loading said second workpiece in said third zone by means of said robot or manipulator; and transporting said second workpiece from said third zone to said operating unit and simultaneously unloading said first workpiece from said fourth zone by means of said robot or manipulator.

A method for using a machine tool for machining workpieces is additionally disclosed, comprising: an operating unit provided with operating means for executing at least one operation on a workpiece; a second inlet and outlet zone for allowing the inlet of at least one workpiece to be machined into said operating unit and the outlet of at least one machined workpiece from said operating unit; a third zone adjacent to said second inlet and outlet zone on the opposite side with respect to said operating unit; second movement means for transporting at least one workpiece from said third zone to said second inlet and outlet zone and from said second inlet and outlet zone to said third zone; a fourth zone adjacent to said third inlet and outlet zone on the opposite side with respect to said second inlet and outlet zone, so that said second inlet and outlet zone is arranged between said third zone and said second inlet and outlet zone; third movement means for transporting at least one workpiece from said third zone to said fourth zone and vice versa; and a robot or manipulator configured to load at least one workpiece in said third zone and/or in said fourth zone and to unload at least one workpiece from said third zone and/or from said fourth zone; wherein said method comprises, in sequence, the steps of: processing a first workpiece by means of said operating unit and simultaneously loading a second workpiece in said fourth zone by means of said robot or manipulator; transporting said first workpiece from said operating unit to said third zone; unloading said first workpiece from said third zone by means of said robot or manipulator; and transporting said second workpiece from said fourth zone to said operating unit.

Preferably, said machine tool also comprises second reference means for attributing at least one spatial reference to at least one workpiece entering said operating unit from said second inlet and outlet zone, wherein said second reference means comprise at least a second abutment element which is movable between an inactive position, wherein said at least a second abutment element does not interfere, in use, with at least one workpiece transported from said second inlet and outlet zone toward said operating unit, and an operating position, wherein said at least a second abutment element interferes, in use, with at least one workpiece transported from said second inlet and outlet zone toward said operating unit; and in that said method comprises the further step of bringing, by means of said robot or manipulator, at least one workpiece arranged on said third zone to abut with said at least one second abutment element in said operating position.

The present invention will be now described, for illustrative but not limitative purposes, according to its preferred embodiments, with particular reference to the figures of the enclosed drawings, wherein:

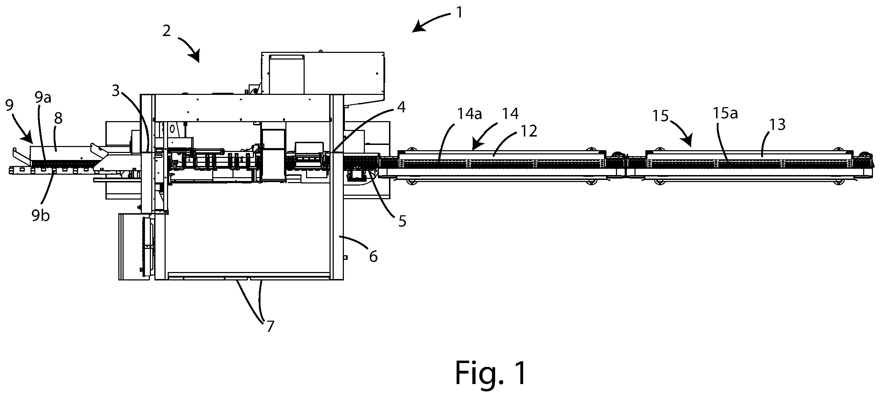

figure 1 is a top plan view of a machine tool according to the present invention;

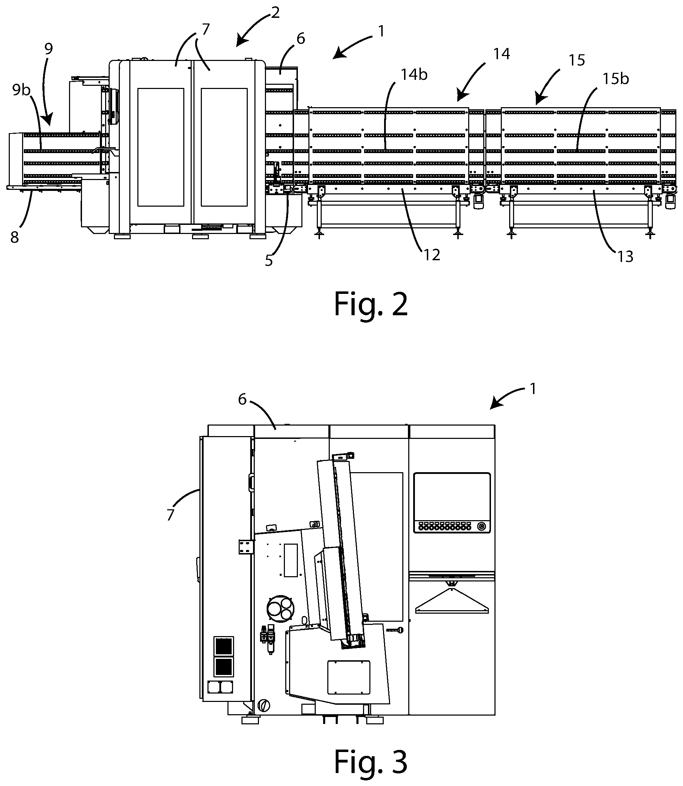

figure 2 is a front view of the machine tool shown in figure 1;
figure 3 is a side view of the machine tool shown in figures 1 and 2;

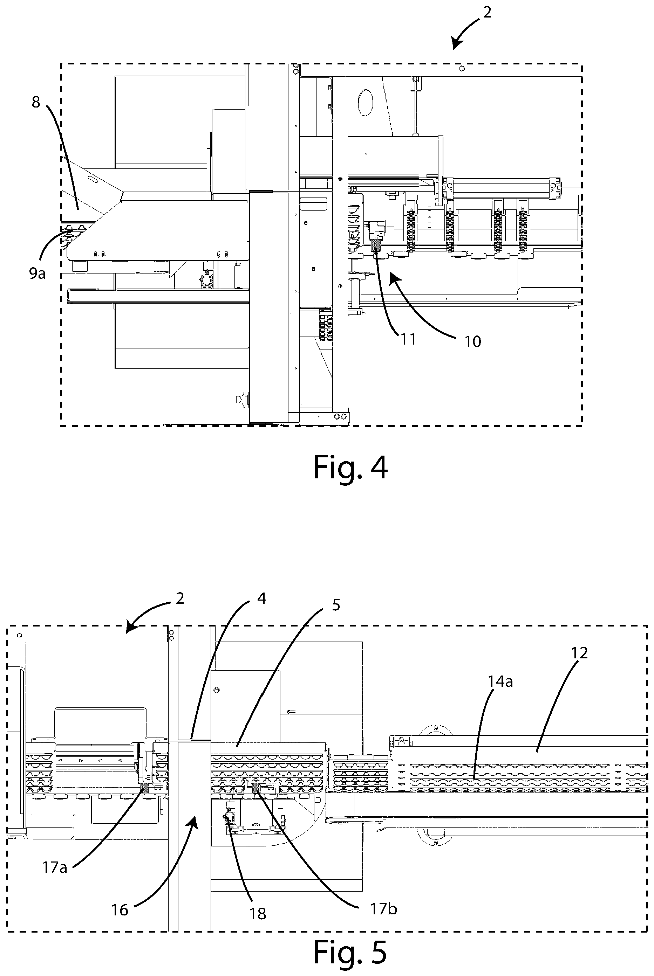

figure 4 is a first detail view extracted from figure 1;
figure 5 is a second detail view extracted from figure 1; and

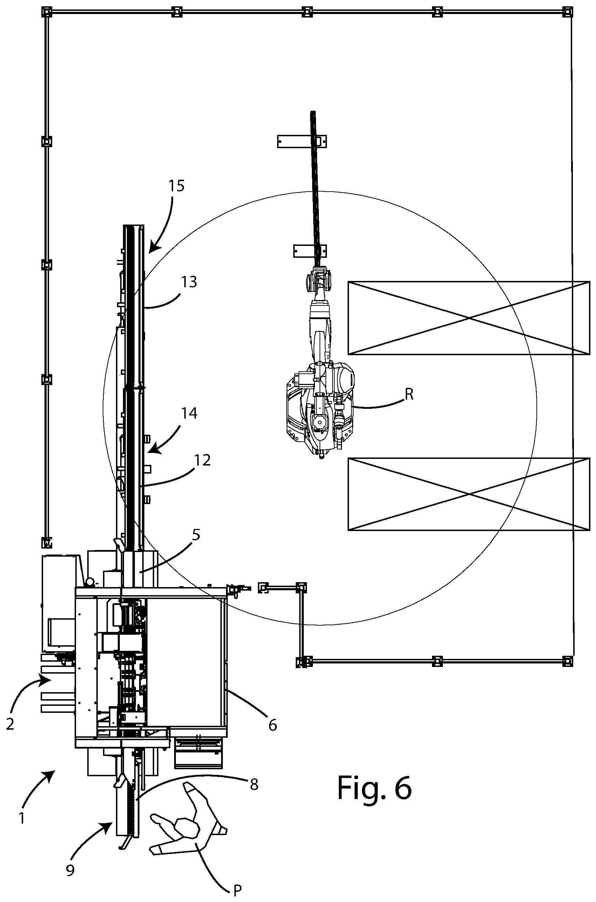

figure 6 is a plan view, from above, of the machine tool shown in figures 1-5, where a human operator and a robot for loading and unloading pieces are also illustrated.

In the various figures, similar parts will be indicated by the same reference numbers.

In the accompanying figures, the numerical reference 1 indicates, as a whole, a machine tool for machining panels or pieces of another type and/or shape.

Said machine tool 1 comprises an operating unit 2, in which a first inlet or outlet 3 is defined to allow the entry of the panels to be machined into the operating unit 2 or the exit of the machined panels from the operating unit 2 itself, and a second inlet or outlet 4 to allow, also in this case, the entry of the panels to be machined or the exit of the machined panels.

The first inlet or outlet opening 3 and the second inlet or outlet opening 4 are mutually opposed, i.e., identified on two opposite sides of the operating unit 2.

Operative means are provided in the operating unit 2 to perform at least one machining on the panels entering from the first inlet or outlet opening 3 or from the second inlet or outlet opening 4.

For example, as shown in the attached figures, one or more boring members can be provided in the operating unit 2, to perform one or more boring operations on the panels.

The operating unit 2 is enclosed in a case or in a protection cabin 6, in which two adjacent doors 7 are provided to allow the access to it by an operator P who has to carry out, for example, control and/or maintenance operations on the operating unit 2 itself.

The machine tool 1 also comprises a first support 8, i.e., a first inlet and outlet area, arranged adjacent to the first inlet or outlet opening 3, and equipped with a first transport system 9 for transporting towards said first inlet or outlet opening 3 of the operating unit 2 the panels loaded in a substantially vertical position on the first support 8 by a human operator P and vice versa, or from the aforementioned first inlet or outlet opening 3 to the first support 8.

In particular, the first transport system 9 includes a conveyor belt 9a, or motorized rollers, on a lower horizontal plane and a plurality of idle rollers 9b arranged on a substantially vertical or slightly inclined plane, with respect to a vertical plane, to allow the displacement of the panels from the first support 8 towards the first inlet or outlet opening 3 of the operating unit 2 and vice versa.

At the interface area between the first support 8 and the operating unit 2, a first reference system 10 is provided to assign a spatial reference to the panel arranged on the first support 8 before its entry into the operating unit 2 through the first opening input or output 3.

In the present case shown in the attached figures, this first reference system 10 comprises a first pin 11, horizontally movable between a retracted or inactive position, in which it does not interfere with the panel transported by the first support 8 towards the operating unit 2, and an extracted or operative position, in which it interferes with the panel transported by the first support 8 towards the operative unit 2, abutting one side of the panel corresponding to the relative thickness.

The same first reference system 10 also includes at least one sensor for detecting when the panel abuts with the first pin 11 in the extracted or operative position.

In a position adjacent to the second inlet or outlet opening 4 of the operating unit 2, there are provided in sequence a second support 5, i.e., a second inlet and outlet area, a third support 12 or a third area and a fourth support 13, i.e., a fourth zone, so that the second support 5 is arranged between the operating unit 2 and the third support 12, and that the latter is in turn between the second support 5 and the fourth support 13.

The machine tool 1 also provides grippers 18, movable between the first support 8 and the second support 5, to grip and move the panels from the first support 8 to the operating unit 2, and vice versa, and from the second support 5 to the operating unit 2, and vice versa.

The same machine tool 1 also comprises a second transport system 14 for transporting the panels from the third support 12 to the second support 5, and vice versa, and a third transport system 15 for transporting the panels from the fourth support 13 to the third support 12, and vice versa.

Like the first transport system 9, the second transport system 14 and the third transport system 15 also comprise a respective conveyor belt 14a, 15a, or respective motorized rollers, on a lower horizontal plane, and a respective plurality of idle rollers 14b, 15b, arranged on a substantially vertical or slightly inclined plane with respect to a vertical plane, to allow, in fact, the displacement of the panels in a substantially vertical or slightly inclined position with respect to a vertical plane.

The transit trajectory of the panels from the first support 8 to the fourth support 13, through the operating unit 2, the second support 5 and the third support 12, is substantially straight and horizontal.

At the interface area between the second support 5 and the operating unit 2, a second reference system 16 is provided, to assign a spatial reference to the panel arranged on the second support 5, before its entry into the operating unit 2 through the second opening input or output 4.

In the case illustrated in the attached figures, the second reference system 16 comprises a second pin 17a and a third pin 17b horizontally movable, each one, between a respective retracted or inactive position, in which they do not interfere with the panel carried by the second support 5, to the operative unit 2, and an extracted or operative position, in which it interferes by abutting the panel transported by the second support 5 to the operative unit 2.

The actuation of said second pin 17a innstead of the third pin 17b, or vice versa, is determined according to the specific sizes of the panel to be transported from the second support 5 to the operating unit 2, for the execution of the foreseen machining.

The same second reference system 16 also includes at least one sensor for detecting when the panel comes into contact with the second pin 17a or with the third pin 17b in the respective extracted or operative position.

On the basis of further variants of the present invention, the first 10 and the second 16 reference system described above can alternatively comprise one or more optical sensors, and/or one or more magnetic sensors, and/or one or more acoustic sensors, and/or one or more sensors of another type.

The machine tool 1 also comprises a robot R, or a manipulator, placed close to the second support 5 or of the third support 12 or of the fourth support 13, for the automatic execution of the loading and unloading operations of the panels from said third support 12 and fourth support 13.

Therefore, in this way this robot R, or manipulator, will operate in a separate area with respect to the area of competence, or the area of action, of the aforementioned human operator P in charge of loading and unloading the panels from the first support 8.

The aforementioned machine tool 1 also comprises a logic control unit operatively connected to the operating unit 2, to the first 10 and to the second 16 reference system, to the first transport system 9, to the second transport system 14, to the third transport system 15, to the grippers 18, and to the aforementioned robot R or manipulator, in such a way as to allow the coordination and interoperability of these operating members and the correct execution of the loading and unloading operations of the panels and of the operations foreseen for the latter in the operating unit 2.

The machine tool 1 described above is therefore configured in such a way as to allow the panels to be processed being placed in the operating unit 2 by making them pass through the first inlet or outlet opening 3 or through the second inlet or outlet opening 4, by moving the movable grippers 18.

Similarly, the machined panels can be made to leave the operating unit 2 through the second inlet or outlet opening 4 or through the first inlet or outlet opening 3 by moving the movable grippers 18.

It follows therefore that the machine tool 1 lends itself to different modes of use.

In particular, to maximize the production level of the machine tool 1 and reduce its downtime, it is possible to program the robot R or the manipulator in such a way that, while the operating unit 2 is working a given first panel, the robot R takes a second panel, bringing it near the third support 12.

Then, at the end of the operations foreseen on the first panel, the latter is transported onto the fourth support 13, passing through the second support 5 and the third support 12.

As soon as the first panel reaches the fourth support 13, the robot R proceeds, in sequence, to load the second panel onto the third support 12 and unload the first panel from the fourth support 13, while the same second panel is transported from the third support 12 towards the operating unit 2 for the execution of the foreseen machinings.

The work cycle just described can be clearly reiterated for an indefinite number of times.

A further method for using the machine 1, on the other hand, provides that while the operating unit 2 is processing a given first panel, the robot R takes a second panel and loads it onto the fourth support 13.

Then, at the end of the operations foreseen on the first panel, the latter is transported from the operating unit 2, to the third support 12, from which it is picked up by the robot R, allowing at this point the transport of the second panel from the fourth support 13 to the operating unit 2, through the third support 12, just released, and the second support 5.

Furthermore, if the second panel is small, it can be provided that when this panel is transported from the fourth support 13 to the third support 12 before reaching the operating unit 2, the robot R approaches it to the stop provided by the aforementioned third pin 17b in the extracted or operative position.

Also in this case, the work cycle can be repeated for an indefinite number of times.

As can be seen from the foregoing description, the machine tool 1 according to the present invention has a structure such as to allow a human operator and a robot or manipulator to carry out the loading and unloading operations on it of panels at the same time, without any risk for the safety of this human operator, as the area of action of the robot or manipulator does not interfere with that of the human operator.

Furthermore, the same machine tool combines a remarkable flexibility of use with high productivity.

## Claims

1. Machine tool (1) for machining workpieces, comprising:
- an operating unit (2) provided with operating means for executing at least one operation on a workpiece;
- a first inlet and outlet zone (8) for allowing the inlet of at least one workpiece to be machined into said operating unit (2) and the outlet of at least one machined workpiece from said operating unit (2), said first inlet and outlet zone (8) being available, in use, to a human operator (P);
- a second inlet and outlet zone (5) for allowing the inlet of at least one workpiece to be machined into said operating unit (2) and the outlet of at least one machined workpiece from said operating unit (2);
- first movement means (18) for transporting at least one workpiece from said first inlet and outlet zone (8) to said operating unit (2) and vice versa, and from said operating unit (2) to said second inlet and outlet zone (5) and vice versa;
- first reference means (10) for attributing at least one spatial reference to at least one workpiece entering said operating unit (2) from said first inlet and outlet zone (8);
- second reference means (16) for attributing at least one spatial reference to at least one workpiece entering said operating unit (2) from said second inlet and outlet zone (5); and
- a robot (R) or a manipulator arranged at said second inlet and outlet zone (5) and adapted to load at least one workpiece in said second inlet and outlet zone (5) and to unload at least one workpiece from said second inlet and outlet zone (5);
wherein said second inlet and outlet zone (5) is arranged in opposite position to said first inlet and outlet zone (8) so that the operating unit (2) is arranged between said first inlet and outlet zone (8) and second inlet and outlet zone (5) so that the area of action of said robot (R) or manipulator does not interfere with the area of action of said human operator (P).

2. Machine tool (1) according to claim 1, **characterized in that** said first reference means (10) comprise at least a first abutment element (11) which is movable between an inactive position, wherein said first abutment element (11) does not interfere, in use, with at least one workpiece to be transported from said first inlet and outlet zone (8) to said operating unit (2), and an operating position, wherein said first abutment element (11) interferes, in use, with at least one workpiece to be transported from said first inlet and outlet zone (8) to said operating unit (2).

3. Machine tool (1) according to claim 1 or 2, **characterized in that** said second reference means (16) comprise at least a second abutment element (17a, 17b) which is movable between an inactive position, wherein said at least a second abutment element (17a, 17b) does not interfere, in use, with at least one workpiece to be transported from said second inlet and outlet zone (5) to said operating unit (2), and an operating position, wherein said at least a second abutment element (17a, 17b) interferes, in use, with at least one workpiece to be transported from said second inlet and outlet zone (5) to said operating unit (2).

4. Machine tool (1) according to any one of the preceding claims, **characterized in that** said first movement means (18) are configured to transport at least one workpiece arranged in substantially vertical or oblique position.

5. Machine tool (1) according to any one of the preceding claims, **characterized in that** said first movement means comprise grippers (18) adapted to grip at least one workpiece and movable from said first inlet and outlet zone (8) to said operating unit (2) and vice versa, and from said operating unit (2) to said second inlet and outlet zone (5) and vice versa.

6. Machine tool (1) according to any one of the preceding claims, **characterized in that** it comprises:
- a third zone (12) adjacent to said second inlet and outlet zone (5) on the opposite side with respect to said operating unit (2), so that said second inlet and outlet zone (5) is arranged between said third zone (12) and said operating unit (2); and
- second movement means (14) for transporting at least one workpiece from said third zone (12) to said second inlet and outlet zone (5) and from said second inlet and outlet zone (5) to said third zone (12).

7. Machine tool (1) according to any one of the preceding claims, **characterized in that** it comprises:
- a fourth zone (13) adjacent to said third zone (12) on the opposite side with respect to said second inlet and outlet zone (5), so that said third zone (12) is arranged between said second inlet and outlet zone (5) and said fourth zone (13); and
- third movement means (15) for transporting at least one workpiece from said third zone (12) to said fourth zone (13) and vice versa.

8. Machine tool (1) according to claim 7, **characterized in that** said third movement means (15) are configured to transport at least one workpiece arranged in substantially vertical or oblique position.

9. Machine tool (1) according to claim 6, **characterized in that** said robot (R) or manipulator is configured to load at least one workpiece in said third zone (12) and to unload at least one workpiece from said third zone (12).

10. Machine tool (1) according to claim 7, **characterized in that** said robot (R) or manipulator is configured to load at least one workpiece in said fourth zone (13) and to unload at least one workpiece from said fourth zone (13).

11. Machine tool (1) according to any one of the preceding claims, **characterized in that** it comprises a control unit operatively connected to said operating unit (2), said first movement means (18), said first reference means (10), said second movement means (14), said second reference means (16) and to said robot (R) or manipulator to coordinate the operation of said operating unit (2), said first movement means (18), said first reference means (10), said second movement means (14), said second reference means (16) and said robot (R) or manipulator.

## Patentansprüche

1. Werkzeugmaschine (1) zur Bearbeitung von Werkstücken, umfassend:
- eine Bedieneinheit (2) mit Bedienelementen zum Ausführen mindestens einer Operation an einem Werkstück;
- einen ersten Einlass- und Auslassbereich (8), um den Einlass mindestens eines zu bearbeitenden Werkstücks in die Arbeitseinheit (2) und den Auslass mindestens eines bearbeiteten Werkstücks aus der Arbeitseinheit (2) zu ermöglichen, wobei der erste Einlass- und Auslassbereich (8) bei der Verwendung für einen menschlichen Bediener (P) verfügbar ist;
- einen zweiten Einlass- und Auslassbereich (5), der den Einlass mindestens eines zu bearbeitenden Werkstücks in die genannte Arbeitseinheit (2) und den Auslass mindestens eines bearbeiteten Werkstücks aus der genannten Arbeitseinheit (2) ermöglicht;
- eine erste Bewegungseinrichtung (18) zum Transportieren mindestens eines Werkstücks von der ersten Einlass- und Auslasszone (8) zu der Arbeitseinheit (2) und umgekehrt, und von der Arbeitseinheit (2) zu der zweiten Einlass- und Auslasszone (5) und umgekehrt;
- erste Referenzmittel (10), um mindestens einem Werkstück, das von der ersten Einlass- und Auslasszone (8) in die Arbeitseinheit (2) eintritt, mindestens einen räumlichen Bezug zuzuordnen;
- zweite Referenzmittel (16), um mindestens einem Werkstück, das von der zweiten Einlass- und Auslasszone (5) in die Arbeitseinheit (2) eintritt, mindestens eine räumliche Referenz zuzuordnen; und
- einen Roboter (R) oder einen Manipulator, der an der zweiten Einlass- und Auslasszone (5) angeordnet und geeignet ist, mindestens ein Werkstück in die zweite Einlass- und Auslasszone (5) zu laden und mindestens ein Werkstück aus der zweiten Einlass- und Auslasszone (5) zu entladen;
wobei der zweite Einlass- und Auslassbereich (5) in einer dem ersten Einlass- und Auslassbereich (8) gegenüberliegenden Position angeordnet ist, so dass die Bedieneinheit (2) zwischen dem ersten Einlass- und Auslassbereich (8) und dem zweiten Einlass- und Auslassbereich (5) angeordnet ist, so dass der Aktionsbereich des Roboters (R) oder Manipulators nicht mit dem Aktionsbereich des menschlichen Bedieners (P) kollidiert.

2. Werkzeugmaschine (1) nach Anspruch 1, **dadurch gekennzeichnet, dass** die ersten Referenzmittel (10) mindestens ein erstes Anschlagelement (11) umfassen, das zwischen einer inaktiven Position, in der das erste Anschlagelement (11) im Betrieb nicht mit mindestens einem Werkstück kollidiert, das von der ersten Einlass- und Auslasszone (8) zur Betriebseinheit (2) transportiert werden soll, und einer Betriebsposition, in der das erste Anschlagelement (11) im Betrieb mit mindestens einem Werkstück kollidiert, das von der ersten Einlass- und Auslasszone (8) zur Betriebseinheit (2) transportiert werden soll.

3. Werkzeugmaschine (1) nach Anspruch 1 oder 2, **dadurch gekennzeichnet, dass** die zweite Referenzeinrichtung (16) mindestens ein zweites Anschlagelement (17a, 17b) umfasst, das zwischen einer inaktiven Position, in der das mindestens eine zweite Anschlagelement (17a, 17b) im Betrieb nicht mit mindestens einem Werkstück kollidiert, das von der zweiten Einlass- und Auslasszone (5) zur Arbeitseinheit (2) transportiert werden soll, und einer Betriebsposition bewegbar ist, in der das mindestens eine zweite Anschlagelement (17a, 17b) im Betrieb mit mindestens einem Werkstück kollidiert, das von der zweiten Einlass- und Auslasszone (5) zur Arbeitseinheit (2) zu transportieren ist.

4. Werkzeugmaschine (1) nach einem der vorstehenden Ansprüche, **dadurch gekennzeichnet, dass** die ersten Bewegungsmittel (18) so konfiguriert sind, dass sie mindestens ein Werkstück transportieren, das in einer im Wesentlichen vertikalen oder schrägen Position angeordnet ist.

5. Werkzeugmaschine (1) nach einem der vorhergehenden Ansprüche, **dadurch gekennzeichnet, dass** die ersten Bewegungsmittel Greifer (18) umfassen, die geeignet sind, mindestens ein Werkstück zu greifen, und die von der ersten Einlass- und Auslasszone (8) zu der Arbeitseinheit (2) und umgekehrt und von der Arbeitseinheit (2) zu der zweiten Einlass- und Auslasszone (5) und umgekehrt bewegbar sind.

6. Werkzeugmaschine (1) nach einem der vorstehenden Ansprüche, **dadurch gekennzeichnet, dass** sie umfasst:
- eine dritte Zone (12), die an die zweite Einlass- und Auslasszone (5) angrenzt, und zwar auf der gegenüberliegenden Seite in Bezug auf die Betriebseinheit (2), so dass die zweite Einlass- und Auslasszone (5) zwischen der dritten Zone (12) und der Betriebseinheit (2) angeordnet ist; und
- eine zweite Bewegungseinrichtung (14) zum Transportieren mindestens eines Werkstücks von der dritten Zone (12) zu der zweiten Einlass- und Auslasszone (5) und von der zweiten Einlass- und Auslasszone (5) zu der dritten Zone (12).

7. Werkzeugmaschine (1) nach einem der vorstehenden Ansprüche, **dadurch gekennzeichnet, dass** sie umfasst:
- eine vierte Zone (13), die an die dritte Zone (12) auf der gegenüberliegenden Seite in Bezug auf die zweite Einlass- und Auslasszone (5) angrenzt, so dass die dritte Zone (12) zwischen der zweiten Einlass- und Auslasszone (5) und der vierten Zone (13) angeordnet ist; und
- ein drittes Bewegungsmittel (15) zum Transportieren mindestens eines Werkstücks von der dritten Zone (12) zur vierten Zone (13) und umgekehrt.

8. Werkzeugmaschine (1) nach Anspruch 7, **dadurch gekennzeichnet, dass** die dritte Bewegungseinrichtung (15) so konfiguriert ist, dass sie mindestens ein in im Wesentlichen vertikaler oder schräger Position angeordnetes Werkstück transportiert.

9. Werkzeugmaschine (1) nach Anspruch 6, **dadurch gekennzeichnet, dass** der Roboter (R) oder Manipulator so konfiguriert ist, dass er mindestens ein Werkstück in die dritte Zone (12) lädt und mindestens ein Werkstück aus der dritten Zone (12) entlädt.

10. Werkzeugmaschine (1) nach Anspruch 7, **dadurch gekennzeichnet, dass** der Roboter (R) oder Manipulator so konfiguriert ist, dass er mindestens ein Werkstück in die vierte Zone (13) lädt und mindestens ein Werkstück aus der vierten Zone (13) entlädt.

11. Werkzeugmaschine (1) nach einem der vorhergehenden Ansprüche, **dadurch gekennzeichnet, dass** sie eine Steuereinheit umfasst, die betriebsmäßig mit der Arbeitseinheit (2), der ersten Bewegungseinrichtung (18), der ersten Referenzeinrichtung (10), der zweiten Bewegungseinrichtung (14), der zweiten Referenzeinrichtung (16) und mit dem Roboter (R) oder Manipulator verbunden ist, um den Betrieb der Arbeitseinheit (2), der ersten Bewegungseinrichtung (18), der ersten Referenzeinrichtung (10), der zweiten Bewegungseinrichtung (14), der zweiten Referenzeinrichtung (16) und des Roboters (R) oder Manipulators zu koordinieren.

## Revendications

1. Machine-outil (1) pour l'usinage de pièces, comprenant:
- une unité de commande (2) dotée de moyens de commande pour exécuter au moins une opération sur une pièce à usiner;
- une première zone d'entrée et de sortie (8) pour permettre l'entrée d'au moins une pièce à usiner dans ladite unité de travail (2) et la sortie d'au moins une pièce usinée de ladite unité de travail (2), ladite première zone d'entrée et de sortie (8) étant à la disposition, en cours d'utilisation, d'un opérateur humain (P);
- une deuxième zone d'entrée et de sortie (5) pour permettre l'entrée d'au moins une pièce à usiner dans ladite unité de travail (2) et la sortie d'au moins une pièce usinée de ladite unité de travail (2);
- des premiers moyens de déplacement (18) pour transporter au moins une pièce depuis ladite première zone d'entrée et de sortie (8) vers ladite unité d'exploitation (2) et vice versa, et depuis ladite unité d'exploitation (2) vers ladite deuxième zone d'entrée et de sortie (5) et vice versa;
- des premiers moyens de référence (10) pour attribuer au moins une référence spatiale à au moins une pièce entrant dans l'unité de travail (2) à partir de la première zone d'entrée et de sortie (8);
- des moyens de seconde référence (16) pour attribuer au moins une référence spatiale à au moins une pièce entrant dans ladite unité d'exploitation (2) à partir de ladite seconde zone d'entrée et de sortie (5); et
- un robot (R) ou un manipulateur disposé au niveau de ladite deuxième zone d'entrée et de sortie (5) et adapté pour charger au moins une pièce dans ladite deuxième zone d'entrée et de sortie (5) et pour décharger au moins une pièce de ladite deuxième zone d'entrée et de sortie (5);
dans laquelle ladite deuxième zone d'entrée et de sortie (5) est disposée à l'opposé de ladite première zone d'entrée et de sortie (8) de sorte que l'unité de commande (2) est disposée entre ladite première zone d'entrée et de sortie (8) et la deuxième zone d'entrée et de sortie (5), de sorte que la zone d'action dudit robot (R) ou manipulateur n'interfère pas avec la zone d'action de l'opérateur humain (P).

2. Machine-outil (1) selon la revendication 1, **caractérisée en ce que** lesdits premiers moyens de référence (10) comprennent au moins un premier élément de butée (11) qui est mobile entre une position inactive, dans laquelle ledit premier élément de butée (11) n'interfère pas, en cours d'utilisation, avec au moins une pièce à transporter de ladite première zone d'entrée et de sortie (8) vers ladite unité de commande (2), et une position de fonctionnement, dans laquelle ledit premier élément de butée (11) interfère, en cours d'utilisation, avec au moins une pièce à transporter de ladite première zone d'entrée et de sortie (8) vers ladite unité de commande (2).

3. Machine-outil (1) selon la revendication 1 ou 2, **caractérisée en ce que** lesdits seconds moyens de référence (16) comprennent au moins un second élément de butée (17a, 17b) qui est mobile entre une position inactive, dans laquelle ledit au moins second élément de butée (17a, 17b) n'interfère pas, lors de l'utilisation, avec au moins une pièce à transporter de ladite deuxième zone d'entrée et de sortie (5) vers ladite unité de commande (2), et une position de fonctionnement, dans laquelle ledit au moins un deuxième élément de butée (17a, 17b) interfère, en cours d'utilisation, avec au moins une pièce à transporter de ladite deuxième zone d'entrée et de sortie (5) vers ladite unité de commande (2).

4. Machine-outil (1) selon l'une quelconque des revendications précédentes, **caractérisée en ce que** lesdits premiers moyens de déplacement (18) sont configurés pour transporter au moins une pièce disposée dans une position sensiblement verticale ou oblique.

5. Machine-outil (1) selon l'une quelconque des revendications précédentes, **caractérisée en ce que** lesdits premiers moyens de déplacement comprennent des pinces (18) adaptées pour saisir au moins une pièce et mobiles depuis ladite première zone d'entrée et de sortie (8) vers ladite unité de commande (2) et vice versa, et depuis ladite unité de commande (2) vers ladite deuxième zone d'entrée et de sortie (5) et vice versa.

6. Machine-outil (1) selon l'une quelconque des revendications précédentes, **caractérisée en ce qu'**elle comprend:
- une troisième zone (12) adjacente à ladite deuxième zone d'entrée et de sortie (5) du côté opposé à ladite unité de commande (2), de sorte que ladite deuxième zone d'entrée et de sortie (5) est disposée entre ladite troisième zone (12) et ladite unité de commande (2); et
- deuxième moyen de déplacement (14) pour transporter au moins une pièce de ladite troisième zone (12) à ladite deuxième zone d'entrée et de sortie (5) et de ladite deuxième zone d'entrée et de sortie (5) à ladite troisième zone (12).

7. Machine-outil (1) selon l'une quelconque des revendications précédentes, **caractérisée en ce qu'**elle comprend:
- une quatrième zone (13) adjacente à ladite troisième zone (12) du côté opposé à ladite deuxième zone d'entrée et de sortie (5), de sorte que ladite troisième zone (12) est disposée entre ladite deuxième zone d'entrée et de sortie (5) et ladite quatrième zone (13); et
- troisième moyen de déplacement (15) pour transporter au moins une pièce de ladite troisième zone (12) à ladite quatrième zone (13) et vice versa.

8. Machine-outil (1) selon la revendication 7, **caractérisée par le fait que** lesdits troisièmes moyens de déplacement (15) sont configurés pour transporter au moins une pièce à usiner disposée en position sensiblement verticale ou oblique.

9. Machine-outil (1) selon la revendication 6, **caractérisée par le fait que** ledit robot (R) ou manipulateur est configuré pour charger au moins une pièce dans ladite troisième zone (12) et pour décharger au moins une pièce de ladite troisième zone (12).

10. Machine-outil (1) selon la revendication 7, **caractérisée par le fait que** ledit robot (R) ou manipulateur est configuré pour charger au moins une pièce dans ladite quatrième zone (13) et pour décharger au moins une pièce de ladite quatrième zone (13).

11. Machine-outil (1) selon l'une quelconque des revendications précédentes, **caractérisée en ce qu'**elle comprend une unité de commande reliée fonctionnellement à ladite unité de commande (2), auxdits premiers moyens de déplacement (18), auxdits premiers moyens de référence (10), auxdits seconds moyens de déplacement (14), auxdits seconds moyens de référence (16) et au dit robot (R) ou manipulateur pour coordonner le fonctionnement de ladite unité de commande (2), desdits premiers moyens de déplacement (18), desdits premiers moyens de référence (10), auxdits seconds moyens de déplacement (14), auxdits seconds moyens de référence (16) et au dit robot (R) ou manipulateur.
